# EUROPEAN PATENT APPLICATION

(11) **EP 4 611 202 A1**
(43) Date of publication of application: **03.09.2025**
(21) Application number: 24160219.2
(22) Date of filing: 28.02.2024
(51) Int. Cl.: H02J 3/01, H02J 3/38, H02J 15/00

(54) **CONTROLLING AN ELECTROLYZING PLANT FOR PRODUCING HYDROGEN AND OXYGEN**

(71) Applicant: Siemens Energy Global GmbH & Co. KG, 81739 München (DE)
(72) Inventor: Lukianov, Semen, 91058 Erlangen (DE); Schumann, Sven, 91452 Wilhermsdorf (DE)

(57) **Abstract**

The invention relates to a method for controlling an electrolyzing plant (10), comprising:
- providing electric energy from an electric power network (32) with a network AC voltage;
- rectifying the network AC voltage by a rectifying device (50, 52, 54, 56, 58, 60, 62, 64);
- supplying water to the electrolyzing device (34, 36);
- providing an AC filter current flow by an active filter device (100), wherein the AC filter current flow is controlled such that it conforms to network regulations of the electric power network;
- measuring the network AC voltage by using a voltage sensor (128) which provides a respective voltage sensor signal;
- comparing the voltage sensor signal with a first reference voltage value providing a comparing result;
- depending on the comparing result, causing the active filter device (100) to emit electric energy to or to receive electric energy from the electric power network.

## Description

The invention relates to a method for controlling an electrolyzing plant for producing hydrogen and oxygen by electrolyzing of water by providing an electrolyzing process, wherein the method comprises providing electric energy from an electric power network that provides a network AC voltage; rectifying the network AC voltage from the electric power network by a rectifying device of the electrolyzing plant, the rectifying device having an AC side being electrically connected with the electric power network and a DC side being electrically connected with an electrolyzing device of the electrolyzing plant, wherein the DC side is configured to provide a DC voltage, wherein an electrolyzing DC current flow at the DC side of the rectifying device causes a respective electrolyzing AC current flow at the AC side of the rectifying device; supplying water to the electrolyzing device, wherein, during the electrolyzing process, the electrolyzing device responds with an electrolyzing DC current flow upon being subjected to the DC voltage; providing an AC filter current flow by an active filter device of the electrolyzing plant such that adding the AC filter current flow to the electrolyzing AC current flow of the rectifying device results in a network AC current flow of the electric power network, wherein the AC filter current flow is controlled by the active filter device such that the network AC current flow conforms to network regulations of the electric power network with regard to limit system perturbations of the electric power network, especially, with regard to at least harmonics and/or a power factor; and adding the AC filter current flow to the electrolyzing AC current flow of the rectifying device in order to cause the network AC current flow. The invention further relates to an apparatus for controlling an electrolyzing plant for producing hydrogen and oxygen by electrolyzing of water by providing an electrolyzing process, wherein the apparatus is configured to cause supplying water to an electrolyzing device of the electrolyzing plant; cause a supply connection of the electrolyzing plant to provide an electric connection to an electric power network that provides a network AC voltage; cause a rectifying device of the electrolyzing plant to rectify the received network AC voltage from the electric power network, the rectifying device having an AC side being electrically connected with the supply connection and a DC side being electrically connected with the electrolyzing device and being configured to provide a DC voltage, wherein the electrolyzing DC current flow at the DC side causes a respective electrolyzing AC current flow at the AC side of the rectifying device; cause an active filter device of the electrolyzing plant to provide an AC filter current flow such that adding the AC filter current flow to the electrolyzing AC current flow of the rectifying device results in a network AC current flow of the electric power network, wherein the AC filter current flow is controlled by the active filter device such that the network AC current flow conforms to network regulations of the electric power network with regard to limit system perturbations of the electric power network, especially, with regard to at least harmonics and/or a power factor. Finally, the invention relates to an electrolyzing plant for producing hydrogen and oxygen by electrolyzing of water based on an electrolyzing process, the electrolyzing plant at least comprising at least one an electrolyzing device, wherein the at least one electrolyzing device is configured to establish at least partially the electrolyzing process, wherein, during the electrolyzing process, the electrolyzing device responds with an electrolyzing DC current flow upon being subjected to a DC voltage; a water supply device connected with the electrolyzing device, wherein the water supply device is configured to supply water to the electrolyzing device; a supply connection being configured to be electrically connected with an electric power network that provides a network AC voltage for providing electric energy; a rectifying device having an AC side being electrically connected with the supply connection and a DC side being electrically connected with the electrolyzing device, wherein the rectifying device is configured to rectify the received network AC voltage from the electric power network in order to provide the DC voltage to the electrolyzing device, wherein the electrolyzing DC current flow at the DC side causes a respective electrolyzing AC current flow at the AC side of the rectifying device; and an active filter device connected with the supply connection, wherein the active filter device is configured to provide an AC filter current flow such that adding the AC filter current flow to the electrolyzing AC current flow of the rectifying device results in a network AC current flow of the electric power network that conforms to network regulations of the electric power network with regard to limit system perturbations of the electric power network, especially, with regard to at least harmonics and a power factor.

Methods for controlling electrolyzing plants for producing hydrogen and oxygen by electrolyzing of water in an electrolyzing process, apparatuses for controlling electrolyzing plants, and electrolyzing plants are well-known in the state of the art, which is why specific documents as a reference need not to be cited. The before-mentioned objects relate to providing an electrolyzing process which is used for producing hydrogen and oxygen by electrolyzing of water. In general, they can be also used to produce carbon monoxide from carbon dioxide, or other electrolyzing processes. The following considerations can be also applied to such electrolyzing processes, respectively.

Electrolysis itself is provided by an electrolyzing device of the electrolyzing plant, which, in turn, comprises usually plural electrolyzing cells. A group of the electrolyzing cells of a specific electrolyzing device may be arranged to form an electrolyzing module. One or more electrolyzing modules may form the electrolyzing device.

The electrolyzing cells of a specific electrolyzing device or a specific electrolyzing module, respectively, may be electrically connected at least partially in series or in parallel. An electric connection of the electrolyzing device may be provided such that at least some, or perhaps all, of the electrolyzing cells are subjected to a respective portion of a DC voltage subjected to the electrolyzing device. The operation of generic electrolyzing cells as well as electrolyzing devices, especially for the use for electrolyzing of water, are well-known to those skilled in the art, such as, for instance, disclosed by DE 197 29 529 C1. The generic function of electrolysis, especially electrolysis of water, is also well-known to those skilled in the art which is why it is refrained from further detailed explanation in this specification.

An electrolyzing device has at least one single electrolyzing cell. However, common designs of electrolyzing devices teach that a specific electrolyzing device has a plurality of electrolyzing cells. During the electrolyzing process, when the electrolyzing device is subjected to the suited DC voltage, the electrolyzing device responds with an electrolyzing DC current flow. During the electrolyzing process, water is consumed, and hydrogen and oxygen are produced. A value of the DC voltage usually may depend on the number of electrolyzing cells being connected in series inside of the electrolyzing device. The electrolyzing DC current flow may depend on the number of electrolyzing cells being connected in parallel as well as the specific design of each of the electrolyzing cells.

Usually, an electrolyzing plant requires a respective high power supply during the electrolyzing process. The conditions for establishing the electrolyzing process are not easy to control which is why it is usually an intention of an operator to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, and/or the like.

In this regard, it should be noted that the electrolyzing plant usually has a rectifying device providing an electrical coupling between the electric power network and the electrolyzing device. The electrolyzing device need to be supplied with DC voltage, whereas, usually, the electric power network provides AC voltage, especially, a three phase AC voltage. Therefore, the electrolyzing plant has at least one rectifying device which receives the AC voltage and, in response, provides the DC voltage. Moreover, the rectifying device may include one or more transformers, in order to transform the AC voltage before rectifying.

For the purpose of rectifying as such, the rectifying device may have thyristors or diodes, respectively. If thyristors are provided, they can be controlled in order to adjust a specific electric power to be supplied to the electrolyzing device. However, the use of thyristors or diodes, respectively, causes an electrolyzing AC current flow which may have at least a substantial distortion with regard to harmonics and which may have an undesirable effect to the power factor which may be much smaller than 1.

However, considering also the high power which is required for the electrolyzing plant, the before-mentioned deficiencies, especially with regard to harmonics and/or power factor, require an active filter device which provides an AC filter current flow such that adding the AC filter current flow to the electrolyzing AC current flow of the rectifying device results in a network AC current flow of the electric power network that conforms to its network regulations, especially with regard to at least harmonics and/or the power factor, in order to limit system perturbations of the electric power network.

It should be further considered that the number of installed electrolyzing plants and existing electric power networks continuously increases. With regard to the global warming range, it is preferred to accelerate the production of green hydrogen. Consequently, electric power network operators consider to define requirements for the connection or large electrolyzing plants in existing electric power networks. Some of the basic requirements that are defined relate to the fault-right-through (FRT) requirements, which define operation areas, when an electrolyzing plant needs to stay connected at a respective electric power network, and operation areas where the electrolyzing plants are allowed being disconnected from the electric power network. Additionally, initial specifications and requirements such as the power factor are defined as well. At least some of the new requirements for load systems further consider requirements for existing photovoltaic farms and wind farms.

Usually, the electrolyzing device requires a high DC current, for instance, in a range of about 7 kA through about 10 kA. This clarifies why the rectifying device usually is based on thyristors, for instance, a B6C configuration. Such a rectifying device may be preferable due to its efficiency and its reliability. However, such a rectifying device is not suited to control actively a value of the reactive power on the AC side of the rectifying device. The reactive power is rather dependent on a firing angle of the thyristors. The firing angle may depend on the power to be supplied to the at least one electrolyzing device.

Considering the development for green hydrogen production, electrolyzing systems shall be connected with the electric power network in the vicinity of photovoltaic farms or wind farms. However, it should be noted that the electric power network may tend to become weaker comparing to electric power networks dominated by conventional power supply plants. Also, hydrogen plants or electrolyzing plants, respectively, may comprise their own wind turbines, photovoltaic panels, and battery energy storage systems (BESS), which are supposed to generate power for the electrolyzing plant only and not supply power to the electric power network.

The situation may become even more serious when considering a trend that most of the countries of the world are replacing existing conventional power plants by renewable energy sources which further decreases a strength and stability of the electric power network.

In case of system perturbations of the electric power network, such as, for instance, a voltage drop, a brownout, an overvoltage condition, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants which may make compulsory not only reactive power support requirements but also injections of reactive current into the electric power network as well.

In this regard, it is an object of the invention to provide a method, an apparatus, as well as an electrolyzing plant which may support stable operation of the electric power network.

As a solution, a method, an apparatus, and an electrolyzing plant according to the independent claims are proposed.

Exemplary embodiments can be further derived from the features of the dependent claims.

With regard to a generic method, it is proposed that the method includes the steps of measuring the network AC voltage by using a voltage sensor which provides a respective voltage sensor signal, comparing the voltage sensor signal at least with a first reference voltage value providing a comparing result, and depending on the comparing result, causing the active filter device at least temporary to emit electric energy to or to receive electric energy from the electric power network, respectively.

With regard to a respective generic apparatus, the invention especially proposes that the apparatus is configured to receive a voltage sensor signal of a voltage sensor configured to measure the network AC voltage, compare the voltage sensor signal at least with a first reference voltage value, wherein providing a comparing result, and, depending on the comparing result, cause the active filter device at least temporary to emit electric energy to or to receive electric energy from the electric power network, respectively.

With regard to a generic electrolyzing plant, the invention especially proposes that the electrolyzing plant comprises an apparatus according to the invention.

Among others, the invention considers that a rectifying device, which is typically thyristor-based, is usually not capable of controlling reactive power or providing injection of reactive current. Therefore, in order to allow achieving a predetermined acceptable power factor and harmonic level at a connection point of the electric power system, an electrolyzing plant is usually equipped with the active filter device, which is capable of providing a power factor compensation and/or active or passive filtering of harmonics. According to the invention, the electrolyzing plant is adapted so that it may provide reactive power support functionality and injection of reactive current. The invention considers further that in case of a critical network situation, especially, a voltage drop, a brownout, or a voltage swell, the electrolyzing plant may supply reactive power in the electric power network and may inject a reactive current. Especially, an amount and/or a limit for such injections of reactive power or reactive current, respectively, may be analyzed separately for each specific case. In this regard, the electrolyzing plant, especially the electrolyzing device, is supposed to receive still enough power in order to maintain its electrolyzing process even during a critical network situation and should not be disconnected from the electric power network, especially, if it is not allowed. In this regard, the active filter device is used to provide a respective AC filter current flow which is determined such that the critical situation can be reduced.

The invention teaches that the network AC voltage is measured by a voltage sensor which provides a respective voltage sensor signal. The voltage sensor signal may be an analogue signal or a digital signal. Then, the voltage sensor signal is compared with at least a first reference voltage value providing a comparing result. Comparing can be provided by a comparing apparatus which may be a component of the electrolyzing plant, especially a component of a control apparatus of the electrolyzing plant or the at least one electrolyzing device. The comparing apparatus may provide the comparing result. For the purpose of comparing, the voltage sensor signal may be processed so that a rms (root mean square) -value, an amplitude value, an average value, or the like.

Depending on the comparing result, the active filter device is caused at least temporary to emit electric energy to or to receive electric energy from the electric power network. The term at least temporary may include that causing is provided for a predetermined time interval, for a presence of a predetermined condition, for instance, as detailed above, or the like. In this regard, the active filter device can be additionally used to stabilize the electric power network, for example, by supplying electric energy into the electric power network if comparing leads to the information that additional power can stabilize electric power network, or to receive additional electric power from the electric power network, if comparing leads to the invention that this would stabilize the electric power network. In this regard, it is possible to establish a dual use for the active filter device. The use of the active filter device can be enhanced by additionally providing a power source function and/or a power receiving or draining function.

The active filter device may comprise energy storage apparatuses such as electric capacitors, electric secondary batteries, electric inductivities, combinations thereof, and/or the like. According to a specific embodiment, the active filter device may comprise one or more inverters connected with the energy storage apparatuses in order to provide an electric coupling to the supply connection of the electrolyzing plant which in turn provides an electric connection with the electric power network.

The apparatus for controlling the electrolyzing plant may be an electronic control apparatus, a control station, or the like. The apparatus may comprise an electric hardware circuitry in order to provide the required functionality. Moreover, the apparatus may also comprise a programmable computer being configured to provide at least partially the required functionality. Also, a combination of a hardware circuitry and a programmable computer may be provided.

According to an exemplary embodiment, it is proposed that the active filter device is caused to emit electric energy if the voltage sensor signal is smaller than the first reference voltage value. This means that the network AC voltage is smaller than a predefined value corresponding to the first reference voltage value. Such a condition may appear as a low voltage condition, a brownout or the like. Supplying additional energy from the active filter device into the electric power network allows reducing the low voltage condition, or the brownout condition, or the like, at least partially.

According to another exemplary embodiment, it is proposed that a second reference voltage value is provided, and comparing includes comparing the voltage sensor signal with the second reference voltage value, and the active filter device is caused to receive electric energy if the voltage sensor signal is larger than the second reference voltage value. This embodiment is directed to a condition where the network AC voltage is higher than a predefined second value corresponding to the second reference voltage value. This condition may correspond to an overvoltage condition. This overvoltage condition can be at least partially reduced by draining additionally electric energy from the electric power network to the active filter device. In this regard, the overvoltage condition can be at least partially reduced.

According to yet another exemplary embodiment, it is proposed that the second reference voltage value is larger than the first reference voltage value. Comparing may comprise comparing the voltage sensor signal with both of the reference voltage values. Therefore, a voltage band can be created by the voltage reference values, wherein the voltage sensor signal leaving this band may cause the active filter device to act correspondingly as detailed before.

According to another exemplary embodiment, it is proposed that emitting or receiving of electric energy, respectively, is provided even if conforming to network regulations of the electric power network cannot be maintained. This embodiment is directed to the situation that the active filter device may not provide sufficient power or energy, respectively, in order to achieve or maintain the respective voltage condition. In this regard, it is allowed reducing the function related to, for example, reducing harmonics or enhancing the power factor, when additional power capacity or energy capacity, respectively, can be resulted.

According to another exemplary embodiment, it is proposed the electrolyzing plant comprises at least one or more additional devices of the group comprising a wind turbine, a photovoltaic device, a battery, wherein an additional AC current flow is provided by the at least one additional device which is added to a sum of the electrolyzing AC current flow and the AC filter current flow, wherein the at least one additional device is caused to provided additional AC current flow depending on the comparing result. The additional devices may be arranged close to the at least one electrolyzing device. The additional devices may be electrically coupled to the at least one electrolyzing device without requiring using the electric power network. The additional devices may be controlled at least partially by the apparatus of the electrolyzing plant. The additional device may comprise one or more inverters in order to provide electric coupling to the supply connection or supply line, respectively, of the electrolyzing plant. The inverter may be transistor-based so that it is possible to provide reactive current or reactive power, respectively, and/or a harmonics compensating current flow. Also, it is possible to enhance or reduce the power provided by the additional device in order to react upon the comparison result so that the electric power network can be further stabilized.

According to yet another exemplary embodiment it is proposed that comparing is at partially provided by a control station of the electric power network. The control station may be externally to the electrolyzing plant. The control station may be in communication with the electrolyzing plant, especially, with the active filter device. For example, it is possible that the active filter device may be controlled by the control station, on the one hand, and by the electrolyzing plant, especially, a control apparatus of the electrolyzing plant, on the other hand. However, it is also possible that the control station communicates with the control apparatus in order to support stabilizing the electric power network.

According to another exemplary embodiment, it is proposed that the active filter device provides the AC filter current flow at least at a fundamental frequency of the network AC voltage of the electric power network. This allows a feasible influence or effect on the condition of the electric power network.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Independent of the grammatical term usage, individuals with male, female or other gender identities are included within the term.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block diagram showing an electric circuitry of an electrolyzing plant having two electrolyzing devices, a battery device, and an active filter device; and
FIG 2 a schematic block diagram showing an electric circuitry of the active filter device in more detail.

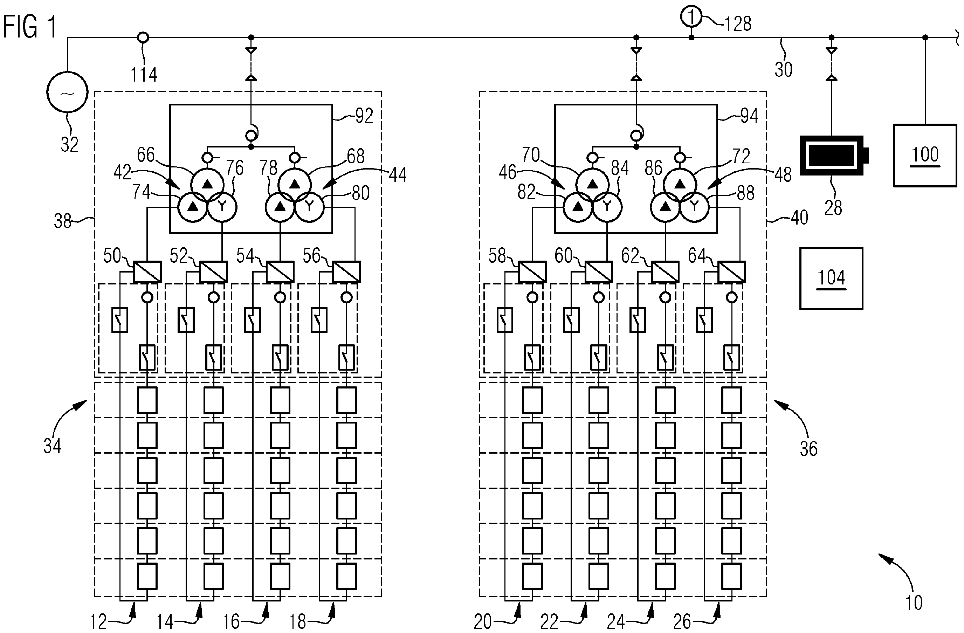

FIG 1 shows a schematic block diagram of an electrolyzing plant 10 for producing hydrogen and oxygen by electrolyzing of water by providing an electrolyzing process. The electrolyzing plant 10 comprises two electrolyzing devices 34, 36 which are connected with an electric power line 30. The electric power line 30 is adapted to provide a three phase network AC voltage. The power line 30 supplies the electrolyzing devices 34, 36 with respective electric energy of an electric power network 32 which is also connected with the power line 30 via a supply connection 114 of the electrolyzing plant 10.

Each of the electrolyzing devices 34, 36 comprise each a plurality of electrolyzing modules 12, 14, 16, 18, 20, 22, 24, 26 which are connected in series. The series connection of the electrolyzing modules 12, 14, 16, 18, 20, 22, 24, 26 is connected with a respective energy supply device 38, 40. In the present embodiment according to FIG 1, six electrolyzing modules 12 are connected in series and connected with the energy supply device 38. Similar, six electrolyzing modules 14 are connected in series and connected with the energy supply device 38. Also, six electrolyzing modules 16, on the one hand, as well as six electrolyzing modules 18, on the other hand, are electricals connected in series and connected with the respective energy supply device 38. The same construction is applied to the second electrolyzing device 36 as can be seen from FIG 1.

It is not shown in the figures that each of the electrolyzing modules 12, 14, 16, 18, 20, 22, 24, 26 has a predefined number of electrolyzing cells which are electrically connected in a matrix circuitry. In other embodiments it is possible, that the electrolyzing cells are electrically connected in series only or in parallel only. In the present embodiment, it is further contemplated that the electrolyzing modules 12 through 26 has the same design. Also not shown in the figures is that the electrolyzing modules 12, 14, 16, 18, 20, 22, 24, 26 have a connection for supplying water to be electrolyzed and further connections for draining of hydrogen and oxygen. The detailed design of a specific electrolyzing cell or the electrolyzing module is not relevant for the invention, which is why it is refrained from describing their detailed design.

As can be seen from FIG 1, the electrolyzing plant 10 has a battery device 28, which is configured to store reversibly electric energy. The battery device 28 comprises, for this purpose, an inverter in order to couple a DC voltage of batteries of the battery device 28 with the power line 30. The inverter allows providing a controllable coupling between the power line 30 and the energy storage device 28 so that, depending on a control signal for the inverter, it is possible to receive and store electric energy drained from the power line 30 or to supply electric energy from the energy storage device 28 to the power line 30.

The electrolyzing plant 10 has additionally a control device 104, which is configured to control all devices of the electrolyzing plant 10. Also, the control device 104 provides the control signal for the battery device 28 in order to control energy flow.

The control device 104 also provides respective control signals for the energy supply devices 38, 40. The control signals may allow controlling an electric power consumed by the electrolyzing devices 34, 36.

In the figures is not shown that the control device 104 is in communication with a control station of the electric power network 32.

The energy supply device 38 has a transformer device 92, which has two transformers 42, 44. The transformers 42, 44 are in the present embodiment identic in view of design and designed for three phase operation. Each of the transformers 42, 44 has a respective primary winding 66, 68 which is connected in parallel with the energy supply line 30. Moreover, the transformer 42 has two secondary windings 74, 76, wherein the secondary winding 74 is connected with a rectifying device 50 and the secondary winding 76 is connected with a rectifying device 52. With regard to the second transformer 44, a respective design is provided as can be seen from FIG 1. The rectifying devices 50 through 56 have respective AC sides and respective DC sides. The same construction is provided for the energy supply device 40 having a transformer device 94, which has a transformer 46, 48. Primary windings 70, 72 of the transformers 46, 48 are connected in parallel with the power supply line 30. Moreover, respective secondary windings 82, 84 as well as 86, 88 are connected with AC sides of respective rectifying devices 58, 60, 62, 64.

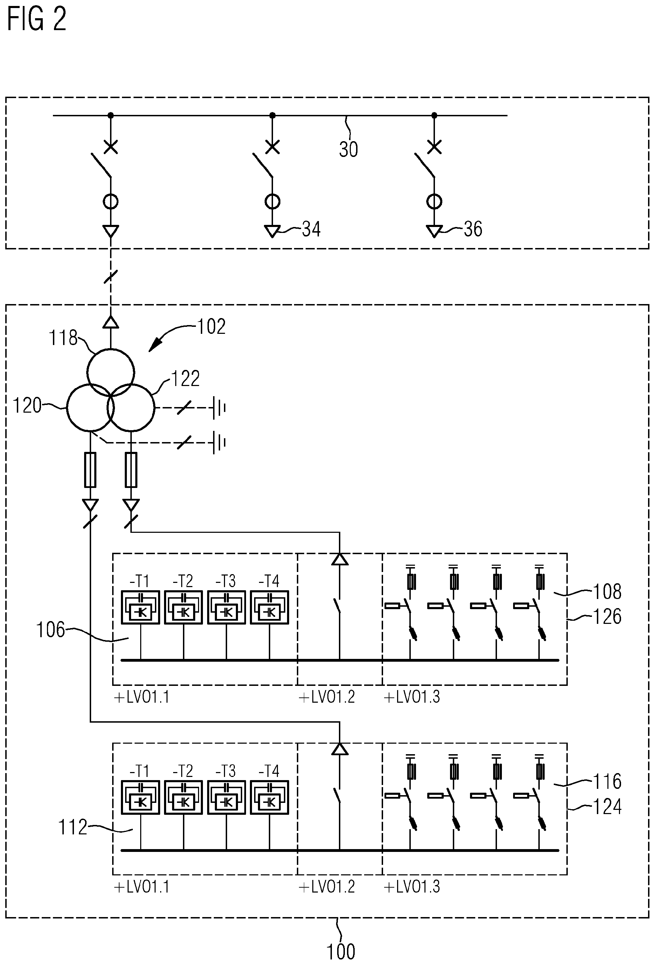

All of the rectifying devices 50 through 64 are designed as a B6C-bridge of thyristors. As can be seen from FIG 1, an active filter device 100 is provided which is also connected with the power supply line 30. The active filter device 100 belongs to the electrolyzing plant 10. The active filter device 100 is further detailed with regard to FIG 2.

The active filter device 100 according to FIG 2 has a transformer 102. The transformer 102 has a primary winding 118 which is connected with the power supply line 30. The transformer 102 is designed for three-phase operation.

The transformer 102 has two secondary windings 120, 122. The primary winding 120 is electrically connected with a first reactive power module 124. The reactive power module 124 has a portion 112 which provides a capacitive behavior, and a portion 116 which provides an inductive behavior. In the same way, a second reactive power device 126 is connected with the secondary winding 122 and has a section 106, which provides a capacitive behavior, and a section 108, which provides an inductive behavior. In this regard, the active power device 100 allows providing an AC filter current flow, which is superimposed to the electrolyzing AC current flow caused by the electrolyzing devices 34, 36. In this regard, the active filter device 100 allows reducing harmonics an enhancing the power factor.

In the present embodiment, the control apparatus 104 is configured for controlling the electrolyzing plant 10 in order to produce hydrogen and oxygen by electrolyzing of water by providing an electrolyzing process. The apparatus 104 is further configured to cause supplying water to the electrolyzing devices 34, 36, and to cause the supply connection of the electrolyzing plant 10 to provide an electric connection to the electric power network 32 that provides the network AC voltage.

The control apparatus 104 further causes the rectifying devices 50, 52, 54, 56, 58, 60, 62, 64 of the electrolyzing plant 10 to rectify the received network AC voltage from the electric power network 32, in order to provide the DC voltage at the respective DC sides of the rectifying devices. The DC voltage is supplied to the electrolyzing devices 34, 36 that cause a respective electrolyzing DC current flow at the DC side of the rectifying devices.

In response to the electrolyzing DC current flow, the AC sides of the electrolyzing devices 34, 36 show a respective electrolyzing AC current flow. The respective electrolyzing AC current flow acts on the power supply line 30 via the respective transformer 42, 44, 46, 48. In this regard, the AC filter current flow of the active filter device 100 and the electrolyzing AC current flows caused by the electrolyzing devices 34, 36 are superimposed on the power supply line 30, which means that their values are added. In this regard, respective control of the active filter device 100 with regard to the AC filter current flow allows compensation of harmonics and with regard to receiving a high value for the power factor. The apparatus 104 causes the active filter device 100 to control the active filter current flow such that the network current flow conforms to network regulations of the electric power network 32 with regard to limit system perturbations of the electric power network 32, especially with regard to harmonics and/or power factor.

The apparatus 104 is further configured to receive a voltage sensor signal of a voltage sensor 128, which is configured to measure the network AC voltage on the power supply line 30. The apparatus 104 is further configured to compare the voltage sensor signal with a first reference voltage value, wherein providing a comparing result. Depending on the comparing result, the apparatus 104 causes the active filter device 100 to emit electric energy to or to receive electric energy from the electric power network 32, respectively. Especially, in the present embodiment, the active filter device 100 is caused to emit electric energy if the voltage sensor signal is smaller than the first reference voltage value. This condition relates to a low volt condition or a brownout condition. The active filter device 100 can therefore be used to stabilize the electric power network 32 in the low voltage condition.

In the same manner, a second reference voltage value can be provided which is larger than the first reference voltage value. The apparatus 104 may compare the voltage sensor signal also with the second reference voltage value and, if the voltage sensor signal is larger than the second reference voltage value, the active filter device 100 is caused to receive electric energy from the electric power network 32. This also helps stabilizing the electric power network 32, especially, when being in a condition of over voltage. So, the active filter device can be used not only for conforming to the network requirements and regulations but also for additional stabilizing of the power network 32.

In the present embodiment, it is further detailed, that the battery device 28 may also be controlled by the control apparatus 104 such that the electric power network 32 can be stabilized. The control apparatus 104 may control for this purpose not only the active filter device 100 but also the battery device 28, respectively. It may be possible, that both devices 28, 100 may be controlled simultaneously at least partially in the same way.

Further embodiments can be derived from the before mentioned description, wherein for example, the electrolyzing plant 10 may additionally comprise one or more wind turbines, or one or more photovoltaic devices, which are presently not shown in the figures. Usually, wind turbines or photovoltaic devices may have transistor-based invertors, which serve to couple the wind turbines or the photovoltaic devices, respectively, with the power supply line 30. The control apparatus 104 may also control the inverters of such wind turbines or photovoltaic devices, respectively, in order to additionally stabilize the electric power network 32. The control of the inverters can be provided as discussed before with regard to the active filter device 100, respectively.

It may be one consideration, that the control apparatus 104 causes the respective devices 28, 100 to provide the respective current flow, for example, the AC current flow at least at a fundamental frequency of the network AC voltage of the electric power network. This may be a preferred embodiment which may result in an enforced stabilization of the electric power network 32.

The embodiments discussed above shall be regarded only as further explaining the subject matter of the invention. They shall not be used to limit the scope of the invention.

## Claims

1. A method for controlling an electrolyzing plant (10) for producing hydrogen and oxygen by electrolyzing of water by providing an electrolyzing process, wherein the method comprises:
- providing electric energy from an electric power network (32) that provides a network AC voltage;
- rectifying the network AC voltage from the electric power network (32) by a rectifying device (50, 52, 54, 56, 58, 60, 62, 64) of the electrolyzing plant (10), the rectifying device (50, 52, 54, 56, 58, 60, 62, 64) having an AC side being electrically connected with the electric power network (32) and a DC side being electrically connected with an electrolyzing device (34, 36) of the electrolyzing plant (10), wherein the DC side is configured to provide a DC voltage, wherein an electrolyzing DC current flow at the DC side of the rectifying device (50, 52, 54, 56, 58, 60, 62, 64) causes a respective electrolyzing AC current flow at the AC side of the rectifying device (50, 52, 54, 56, 58, 60, 62, 64) ;
- supplying water to the electrolyzing device (34, 36), wherein, during the electrolyzing process, the electrolyzing device (34, 36) responds with an electrolyzing DC current flow upon being subjected to the DC voltage;
- providing an AC filter current flow by an active filter device (100) of the electrolyzing plant (10) such that adding the AC filter current flow to the electrolyzing AC current flow of the rectifying device (50, 52, 54, 56, 58, 60, 62, 64) results in a network AC current flow of the electric power network (32), wherein the AC filter current flow is controlled by the active filter device (100) such that the network AC current flow conforms to network regulations of the electric power network (32) with regard to limit system perturbations of the electric power network (32), especially, with regard to at least harmonics and/or a power factor; and
- adding the AC filter current flow to the electrolyzing AC current flow of the rectifying device (50, 52, 54, 56, 58, 60, 62, 64) in order to cause the network AC current flow; **characterized by**
- measuring the network AC voltage by using a voltage sensor (128) which provides a respective voltage sensor signal;
- comparing the voltage sensor signal at least with a first reference voltage value providing a comparing result; and
- depending on the comparing result, causing the active filter device (100) at least temporary to emit electric energy to or to receive electric energy from the electric power network (32), respectively.

2. The method of claim 1, **characterized in that** the active filter device (100) is caused to emit electric energy if the voltage sensor signal is smaller than the first reference voltage value.

3. The method of anyone of the preceding claims, **characterized in that** a second reference voltage value is provided, and comparing includes comparing the voltage sensor signal with the second reference voltage value, and the active filter device (100) is caused to receive electric energy if the voltage sensor signal is larger than the second reference voltage value.

4. The method of claim 3, **characterized in that** the second reference voltage value is larger than the first reference voltage value.

5. The method of anyone of the preceding claims, **characterized in that** emitting or receiving of electric energy, respectively, is provided even if conforming to network regulations of the electric power network (32) cannot be maintained.

6. The method of anyone of the preceding claims, **characterized in that** the electrolyzinG plant (10) comprises at least one or more additional devices (28) of the group comprising a wind turbine, a photovoltaic device, a energy storage device, wherein an additional AC current flow is provided by the at least one additional device (28) which is added to a sum of the electrolyzing AC current flow and the AC filter current flow, wherein the at least one additional device (28) is caused to provided additional AC current flow depending on the comparing result.

7. The method of anyone of the preceding claims, **characterized in that** comparing is at partially provided by a control station of the electric power network (32).

8. The method of anyone of the preceding claims, **characterized in that** the active filter device (100) provides the AC filter current flow at least at a fundamental frequency of the network AC voltage of the electric power network (32).

9. An apparatus (104) for controlling an electrolyzing plant (10) for producing hydrogen and oxygen by electrolyzing of water by providing an electrolyzing process, wherein the apparatus (104) is configured to:
- cause supplying water to an electrolyzing device (34, 36) of the electrolyzing plant (10);
- cause a supply connection (114) of the electrolyzing plant (10) to provide an electric connection to an electric power network (32) that provides a network AC voltage;
- cause a rectifying device (50, 52, 54, 56, 58, 60, 62, 64) of the electrolyzing plant (10) to rectify the received network AC voltage from the electric power network (32), the rectifying device (50, 52, 54, 56, 58, 60, 62, 64) having an AC side being electrically connected with the supply connection (114) and a DC side being electrically connected with the electrolyzing device (34, 36) and being configured to provide a DC voltage, wherein the electrolyzing DC current flow at the DC side causes a respective electrolyzing AC current flow at the AC side of the rectifying device(50, 52, 54, 56, 58, 60, 62, 64);
- cause an active filter device (100) of the electrolyzing plant (10) to provide an AC filter current flow such that adding the AC filter current flow to the electrolyzing AC current flow of the rectifying device (50, 52, 54, 56, 58, 60, 62, 64) results in a network AC current flow of the electric power network (32), wherein the AC filter current flow is controlled by the active filter device (100) such that the network AC current flow conforms to network regulations of the electric power network (32) with regard to limit system perturbations of the electric power network (32), especially, with regard to at least harmonics and/or a power factor;
**characterized in that**
the apparatus (104) is configured to:
- receive a voltage sensor signal of a voltage sensor (128) configured to measure the network AC voltage;
- compare the voltage sensor signal at least with a first reference voltage value, wherein providing a comparing result; and
- depending on the comparing result, cause the active filter device (100) at least temporary to emit electric energy to or to receive electric energy from the electric power network (32), respectively.

10. An electrolyzing plant (10) for producing hydrogen and oxygen by electrolyzing of water based on an electrolyzing process, the electrolyzing plant (10) at least comprising:
- at least one an electrolyzing device (34, 36), wherein the at least one electrolyzing device (34, 36) is configured to establish at least partially the electrolyzing process, wherein, during the electrolyzing process, the electrolyzing device (34, 36) responds with an electrolyzing DC current flow upon being subjected to a DC voltage;
- a water supply device connected with the electrolyzing device (34, 36), wherein the water supply device is configured to supply water to the electrolyzing device (34, 36) ;
- a supply connection (114) being configured to be electrically connected with an electric power network (32) that provides a network AC voltage for providing electric energy;
- a rectifying device (50, 52, 54, 56, 58, 60, 62, 64) having an AC side being electrically connected with the supply connection (114) and a DC side being electrically connected with the electrolyzing device (34, 36), wherein the rectifying device (50, 52, 54, 56, 58, 60, 62, 64) is configured to rectify the received network AC voltage from the electric power network (32) in order to provide the DC voltage to the electrolyzing device (34, 36), wherein the electrolyzing DC current flow at the DC side causes a respective electrolyzing AC current flow at the AC side of the rectifying device (50, 52, 54, 56, 58, 60, 62, 64); and
- an active filter device (100) connected with the supply connection (114), wherein the active filter device (100) is configured to provide an AC filter current flow such that adding the AC filter current flow to the electrolyzing AC current flow of the rectifying device (50, 52, 54, 56, 58, 60, 62, 64) results in a network AC current flow of the electric power network (32) that conforms to network regulations of the electric power network (32) with regard to limit system perturbations of the electric power network (32), especially, with regard to at least harmonics and a power factor;
**characterized by**
an apparatus (104) according to claim 9.
